# EUROPEAN PATENT APPLICATION

(11) **EP 2 072 778 A1**
(43) Date of publication of application: **24.06.2009**
(21) Application number: 08172195.3
(22) Date of filing: 18.12.2008
(51) Int. Cl.: F02B 77/11, B60R 13/08, F01N 7/10

(54) **Improvements in or relating to heat shields**

(30) Priority: 20.12.2007 GB 0724738
(71) Applicant: Nissan Motor Iberica SA, 08040 Barcelona (ES)
(72) Inventor: Lopez Ortiz, Andrés, 08040, Barcelona (ES); Lopez Ortiz, José Luis, 08040, Barcelona (ES)
(74) Representative: Holmes, Matthew William

(57) **Abstract**

A heat shield (10) is provided for protecting a plastic part within the engine bay of a vehicle. The heat shield comprises a main body (30) for shielding the plastic part from heat; a clip (20) for attaching the heat shield to the plastic part; and a mounting arm (62) attached to the body and configured to provide a gap between the body and the clip.

## Description

The present invention relates to a heat shield for protecting a plastic part and, in particular, to a heat shield for protecting a timing enclosure.

Within the engine bay of a motor vehicle, heat flow management is very important. There are a number of different heat sources contained within the engine bay. Also, within the engine bay, there are many different parts that have to be construed from a variety of different materials that may be more or less susceptible to damage from heat. Management of heat flow within the engine bay as a whole is therefore very important in ensuring the efficient functioning of the engine and all of its components. Effective heat management also ensures that all engine components perform as intended.

The exhaust system as a whole, including the turbo-charger, the catalytic converter and the associated pipe work, emits a considerable amount of heat which must be managed. In the vicinity of the catalytic converter, there are a number of parts which are typically plastic. In some vehicles, the timing enclosure is close to the catalyst and the timing enclosure is a plastic part which can be damaged by heat. In other vehicles, fuse boxes, relay covers, ECU enclosures and associated harnesses are plastic parts that are mounted close to heat sources within the engine bay and may require shielding.

It is known to provide heat shields within the engine bay. GB 2 381 067 discloses an air intake structure that includes a cover that is intended to act as a heat shield. The cover is bolted into place using a weld nut and bolt. The use of a weld nut and bolt to secure a heat shield has a number of disadvantages. In particular, the part to which the shield is attached has to be punctured in order to insert the bolt into an aperture. This can be a problem in that it can create a path for dirt and moisture ingress and may act as a stress raiser leading to cracking.

In order to avoid puncturing the surface of the part that requires heat protection, US2006/0176671 provides a heat shield comprising a securing head that is held in place by a securing spring.

It is against this background that the present invention has been made.

According to the present invention there is provided a heat shield for protecting a plastic part within the engine bay of a vehicle, the heat shield comprising: a main body for shielding the plastic part from heat; a clip for attaching the heat shield to the plastic part; and a mounting arm attached to the body and configured to provide a gap between the body and the clip.

Mounting the heat shield using clips, rather than bolting the heat shield to the plastic part ensures the integrity of the plastic part and does not open any pathways for the ingress of dust and moisture. Furthermore, clips do not require any tools to be used in order to mount the heat shield onto the plastic part. This speeds up the assembly process. The efficiency of the assembly process is further improved as the mounting operation uses a single part, rather than requiring the operative to handle a part and a fastener. Moreover, the use of a clip reduces the possible failure modes as no judgement is required in setting the tightness of the clip as there would be in selecting how tight to attach a nut and bolt combination. Overall, this results in a reduction in the parts complexity and reduces the assembly time for this part.

The main body and a part of the mounting arm may be substantially parallel. By holding the main body in a spaced apart relation with the mounting arm, the main body traps a layer of air in the gap. The air provides a further insulation for the plastic part from the heat emitted by the catalytic converter.

The thickness of the gap may be greater than the thickness of the main body. The provision of a gap that is thicker than the material from which the main body is fabricated ensures that the air gap is sufficiently large that heat cannot easily be transferred across the gap. In particular, the heat shield may be fabricated from 1 mm thick Aluminium and the gap may be between 10mm and 15mm or, in particular 11.5mm.

The main body may be provided with a hatch, which allows access to the fastening that hold the plastic part closed. As a result of the provision of the hatch, the timing case to be opened for servicing without removing the heat shield.

The heat shield may further comprise at least one perpendicular protrusion. The position of the protrusion, or each protrusion where a number of protrusions are provided, is selected so that the shape of the heat shield closely mirrors the outer surface of the plastic part. This enables the air gap to extend around the edge of the plastic part and thus prevents the hot air from entering the gap and effectively bypassing the heat shield.

The mounting arm may further comprise at least one guide for guiding the clip. The guide aids the operative and ensures that the clip is brought into contact with the correct part of the plastic part.

The heat shield may comprise two clips and at least two guides. The provision of two clips and at least two, possibly three, guides provides a robust mounting arm that has improved stability.

The clip may have an S-shaped profile thus providing two substantially parallel channels. Furthermore, the clip may be provided with a barb in each of the complementary channels. The barb ensures that it is easy to affix the heat shield, but that the heat shield will not become lose due to vibration.

The plastic part may be a timing enclosure for use on a vehicle. The timing enclosure may comprise a timing cover and a timing case which overlap to form a lip, and the heat shield may be configured to be mounted on the lip.

The present invention will now be described, by way of example only, with reference to the accompanying drawings in which:
Figure 1 shows an engine, showing the proximity of the catalyst to the timing cover;
Figure 2 shows the engine shown in Figure 1 fitted with a heat shield according to the invention;
Figure 3 is a part perspective view of the heat shield shown in Figure 2 from behind;
Figure 4 is a front part perspective view of the heat shield shown in Figure 2;
Figure 5 is a cross sectional view through the heat shield along the line A-A shown in Figure 2; and
Figure 6 shows a clip that forms part of the heat shield shown in Figures 2 to 5.

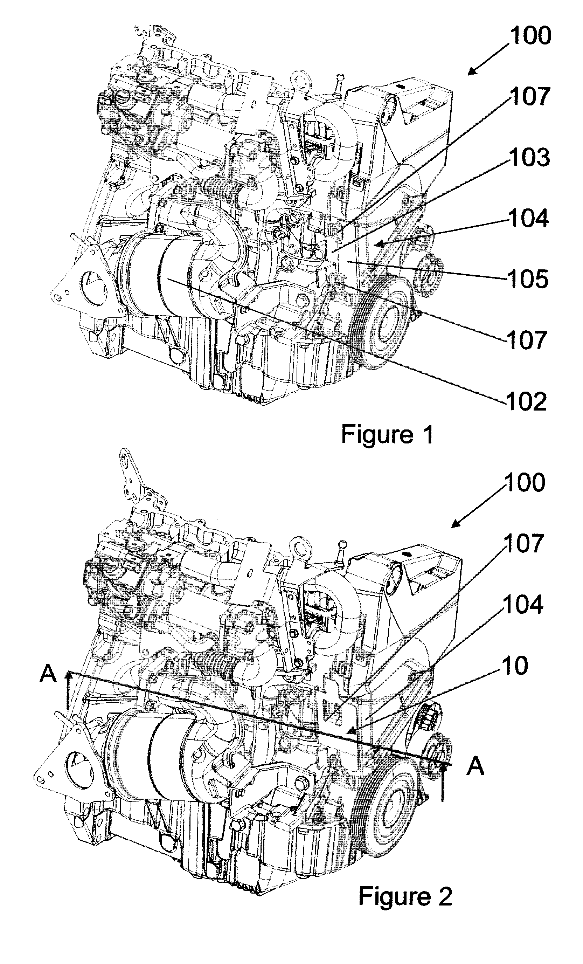

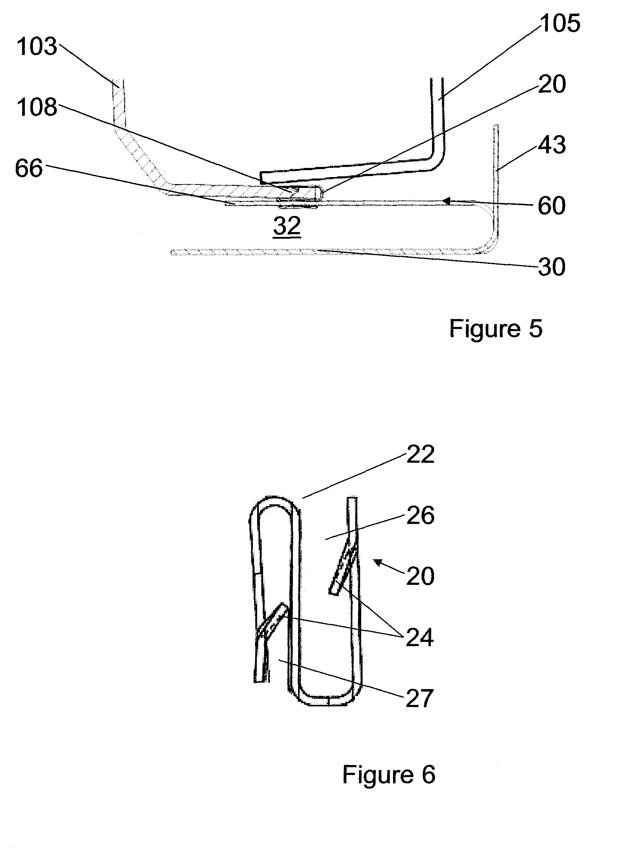

Figure 1 shows an engine 100 that has, inter alia, a catalytic converter 102 and a timing enclosure 104. The timing enclosure 104, shown in Figures 1 and 5, is a clam-shell design formed by a timing case 103 and a timing cover 105 which overlap to form a lip 108. The enclosure 104 is closed by a pair of fasteners 107. The fasteners 107 are integrally moulded into the timing case 103 and timing cover 105 respectively. Figure 1 shows the proximity of the catalytic converter 102 to the timing enclosure 104. The catalytic converter 102 emits a considerable amount of heat and the timing enclosure 104 is a plastic part. The heat radiated from the catalytic converter 102 can damage the plastic of the timing enclosure 104 and therefore a heat shield is required.

Figure 2 shows the engine 100 of Figure 1 with a heat shield 10 in place. The heat shield 10 is attached directly to the timing enclosure 104 and substantially covers the timing enclosure 104 to prevent damage from heat emanating from the catalytic converter 102.

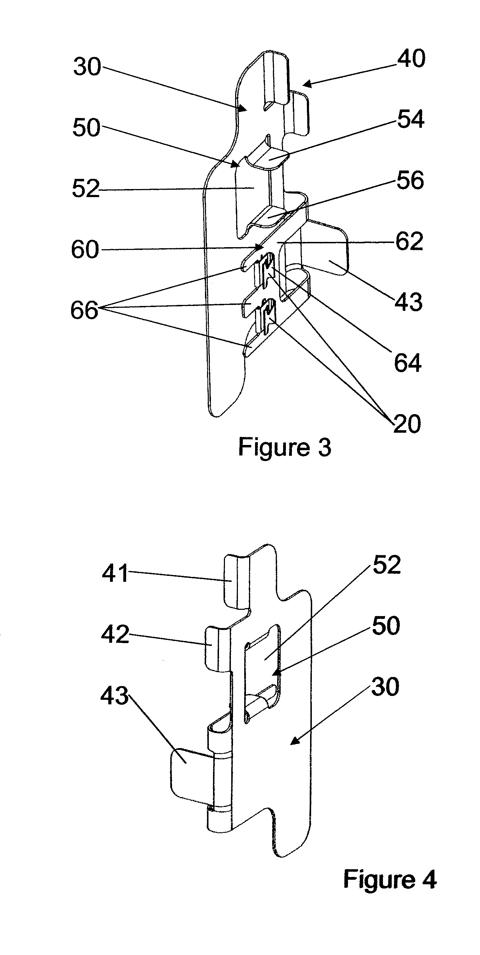

Figures 3 and 4 show the heat shield 10 in isolation. The heat shield 10 is formed as a single piece and is provided with two clips 20 to affix the heat shield onto the timing enclosure 104. The heat shield 10 is fabricated from 1 mm thick aluminium although the exact thickness can be selected according to the particular application.

The details of the clips 20 are shown in Figure 6. The clips 20 have an S-shaped body portion 22, provided with barbs 24 at each end of the S-shaped body portion 22 of the clip 20. The S-shaped body portion 22 provides two substantially parallel channels 26, 27 that allow the clip 20 to bind together two substantially parallel planar surfaces. Each of the clips 20 is mounted onto the heat shield 10 using one of the two channels 26. The second channel 27 is used to affix the heat shield to the timing enclosure 104.

The heat shield 10 comprises a main body 30, perpendicular portions 40, a hatch 50 and a mounting portion 60.

The main body 30 is substantially planar and is designed to shield the timing enclosure 104 from the heat given off by the catalytic converter 102. The main body 30 covers substantially the entirety of the exposed surface area of the timing enclosure 104.

The main body 30 is configured to maintain a position spaced apart from the timing enclosure 104 that it is intended to protect. The spaced apart configuration of the heat shield 10 provides for a gap 32 between the heat shield 10 and the timing enclosure 104. This gap 32 is designed to be 11.5mm when the mounting portion 60 is parallel, although depending on the exact angle of application of the heat shield 10 as a whole the gap may be between 8mm and 15mm. In other applications, depending on, among other factors, the packaging constraints or the part of the engine bay in which the heat shield 10 is to be mounted, the gap may be larger. In order to be effective, the gap 32 should be at least three times the thickness of the main body and more preferably at least ten times the thickness of the main body. The gap 32 traps a layer of relatively cool air and this layer of air further protects the timing enclosure 104.

In order to ensure that the gap 32 traps relatively cool air, it is important to prevent air heated by the catalytic converter 102 from moving directly into the gap 32. In order to do this a number of perpendicular portions 40 are provided. As best seen in Figure 4, there are three protrusions 41, 42, 43 that extend perpendicular to the main body 30. The provision of the protrusions 41, 42, and 43 allows the gap 32 to extend around the end of the timing enclosure 104 to prevent the hot air from entering the gap 32 in a direction perpendicular to the plane of the main body 30 of the heat shield 10.

The timing enclosure 104 is a part that may occasionally require removal for servicing. The fastenings 107 are provided in order to facilitate servicing. If the main body 30 of the heat shield were to be continuous across the full surface area of the timing enclosure 104, then at least one of the fastenings 107 would be obscured by the heat shield, making access during servicing more difficult. In order to facilitate access to the fastenings 107, a hatch 50 is provided. The hatch 50 comprises an aperture 52 and two protrusions 54, 56 that extend perpendicular to the plane of the main body 30 of the heat shield 10. The protrusions 54, 56 help to reduce the ingress of hot air into the gap 32 whilst still facilitating an operative to release the fastenings 107.

The mounting portion 60 comprises a mounting arm 62, mounting points 64 for the two clips 20 and guides 66. The mounting arm 62 extends from one edge of the main body 30. The mounting arm 62 is configured to provide the mounting points 64 substantially parallel to the plane of the main body 30, but spaced apart by approximately 8mm to 15mm. In the illustrated example, the main body is spaced apart by 11.5mm. The mounting arm 62 is separated into two parts and protrusion 43 is provided between the two parts of the mounting arm 62. The protrusion 43 is spaced apart approximately 12mm from the side of the timing cover 105. The protrusion 43 protects the mounting portion 60 from heat.

The two clips 20 are provided with guides 66, which are mounted at each side of each of the clips 20. The guides 66 are elongate and are configured to ensure that the heat shield is correctly positioned relative to the timing enclosure 104.

Further detail of the interface between the timing cover 105 and the heat shield 10 is shown in Figure 5 which is a cross sectional view along the line A-A shown in Figure 2. The timing enclosure 104 is closed using a clam-shell closure comprising a timing case 103 and a timing cover 105. The closure is called a clam-shell closure because there is an overlap between the timing case 103 and the timing cover 105. The overlap provides a lip 108. The heat shield 10 is mounted by pushing the guides 66 along the surface of the timing cover 105 until the clips 20 are fully engaged with the lip 108.

Because the heat shield 10 is attached to the lip 108, the timing enclosure 104 can still be opened without removing the heat shield 10. Furthermore, affixing the heat shield 10 to the lip 108 does not compromise the integrity of the timing enclosure 104 and the introduction of the heat shield 10 therefore does not introduce any additional problems relating to dirt and moisture ingress.

The combination of the clips 20 and the guides 66 to attach the heat shield to the timing enclosure 104 allows the heat shield to be attached as a single operation that can be carried out without the need for tools.

## Claims

1. A heat shield for protecting a plastic part within the engine bay of a vehicle, the heat shield comprising:
a main body for shielding the plastic part from heat;
a clip for attaching the heat shield to the plastic part; and
a mounting arm attached to the body and configured to provide a gap between the body and the clip.

2. The heat shield according to claim 1, wherein the main body and a part of the mounting arm are substantially parallel.

3. The heat shield according to claim 2, wherein the thickness of the gap is greater than the thickness of the main body.

4. The heat shield according to any one of claims 1 to 3, wherein the main body is provided with a hatch.

5. The heat shield according to any one of claims 1 to 4, further comprising at least one perpendicular protrusion.

6. The heat shield according to any one of claims 1 to 5, wherein the mounting arm further comprises at least one guide for guiding the clip.

7. The heat shield according to claim 6, further comprising at least one additional clip and at least one additional guide.

8. The heat shield according to any one of claims 1 to 7, wherein the clip has an S-shaped profile thus providing two substantially parallel channels.

9. The heat shield according to claim 8, wherein the clip is provided with a barb in each of the complementary channels.

10. The heat shield according to any one of claims 1 to 9, wherein the plastic part is a timing enclosure for use on a vehicle, wherein the timing enclosure comprises a timing case and a timing cover configured to overlap forming a lip, and wherein the heat shield is configured to be mounted on the lip.
